# EUROPEAN PATENT APPLICATION

(11) **EP 4 621 547 A1**
(43) Date of publication of application: **24.09.2025**
(21) Application number: 25161577.9
(22) Date of filing: 04.03.2025
(51) Int. Cl.: G06F 3/12

(54) **IMAGE FORMING APPARATUS AND IMAGE FORMATION SYSTEM**

(30) Priority: 18.03.2024 JP 2024042514
(71) Applicant: KYOCERA Document Solutions Inc., Osaka-shi, Osaka, 540-8585 (JP)
(72) Inventor: KOWAKA, Makoto, Osaka-shi, Osaka, 540-8585 (JP); SAKABE, Keiji, Osaka-shi, Osaka, 540-8585 (JP)
(74) Representative: Herrero & Asociados, S.L.

(57) **Abstract**

An image forming apparatus (100) includes an image forming device (15), a direct wireless communication device (121), a network communication device (122), and a control device (11) that functions as a controller (111). The image forming device (15) forms an image on a sheet. The direct wireless communication device (121) performs direct wireless communication with an electronic terminal (8). The network communication device (122) connects to an access point (9) connected to a network. The controller (111) controls processing in an easy setup mode in which connection of the network communication device (122) to the access point (9) is set up based on connection setup information received by the direct wireless communication device (121) from the electronic terminal (8) and regarding setup of connection to the access point (9), thus connecting the image forming apparatus (100) to the access point (9).

## Description

### BACKGROUND

The present invention relates to image forming apparatuses capable of direct wireless communication with electronic terminals and image formation systems including an electronic terminal and an image forming apparatus.

Most image forming apparatuses, such as multifunction peripherals that function as a scanner, a printer, a copier, and/or a facsimile machine, have a direct wireless communication function of directly communicating with an electronic terminal, such as a personal computer (PC), a tablet terminal or a smartphone, using a predetermined wireless communication technology, such as Wi-Fi (registered trademark) (Wi-Fi Direct).

For example, there is generally known a technique for preventing an incorrect operation in setting up a network connection for a communication device (an image forming apparatus) using direct wireless communication with a terminal device from causing an interruption of the connection setup.

### SUMMARY

A technique improved over the aforementioned technique is proposed as one aspect of the present invention.

An image forming apparatus according to an aspect of the present invention includes an image forming device, a direct wireless communication device, a network communication device, and a control device. The image forming device forms an image on a sheet. The direct wireless communication device performs direct wireless communication with an electronic terminal. The network communication device connects to an access point connected to a network. The control device includes a processor and functions as a controller through the processor executing a control program. The controller controls processing in an easy setup mode in which connection of the network communication device to the access point is set up based on connection setup information received by the direct wireless communication device from the electronic terminal and regarding setup of connection to the access point, thus connecting the image forming apparatus to the access point.

An image formation system according to another aspect of the present invention includes an image forming apparatus and an electronic terminal. The electronic terminal includes a terminal-side communication device and a first control device. The terminal-side communication device communicates with the image forming apparatus. The first control device includes a processor and functions as a terminal-side controller through the processor executing a control program. The terminal-side controller allows the terminal-side communication device to send, to the image forming apparatus, connection setup information regarding setup of connection to an access point connected to a network. The image forming apparatus includes an image forming device, a direct wireless communication device, a network communication device, and a second control device. The image forming device forms an image on a sheet. The direct wireless communication device performs direct wireless communication with the electronic terminal. The network communication device connects to the access point. The second control device includes a processor and functions as a controller through the processor executing a control program. The controller controls processing in an easy setup mode in which connection of the network communication device to the access point is set up based on the connection setup information received by the direct wireless communication device from the electronic terminal, thus connecting the image forming apparatus to the access point.

### BRIEF DESCRIPTION OF THE DRAWINGS

FIG. 1A is a diagram showing a configuration of an image formation system.
FIG. 1B is a diagram showing an example of a configuration of an electronic terminal.
FIG. 2 is a flowchart showing the flow of an easy Wi-Fi setup mode.
FIG. 3 is a view showing an example of a network setup screen.
FIG. 4 is a view showing an example of a waiting screen.
FIG. 5 is a view showing an example of a setup screen.
FIG. 6 is a view showing an example of a list screen.
FIG. 7 is a view showing an example of a sending screen.
FIG. 8 is a view showing an example of a selection screen.
FIG. 9 is a view showing an example of an alert screen displayed on a display device of an image forming apparatus.
FIG. 10 is a view showing an example of an alert screen displayed on a display device of an electronic terminal.

### DETAILED DESCRIPTION

Hereinafter, a description will be given of an image formation system according to an embodiment of the present invention with reference to the drawings.

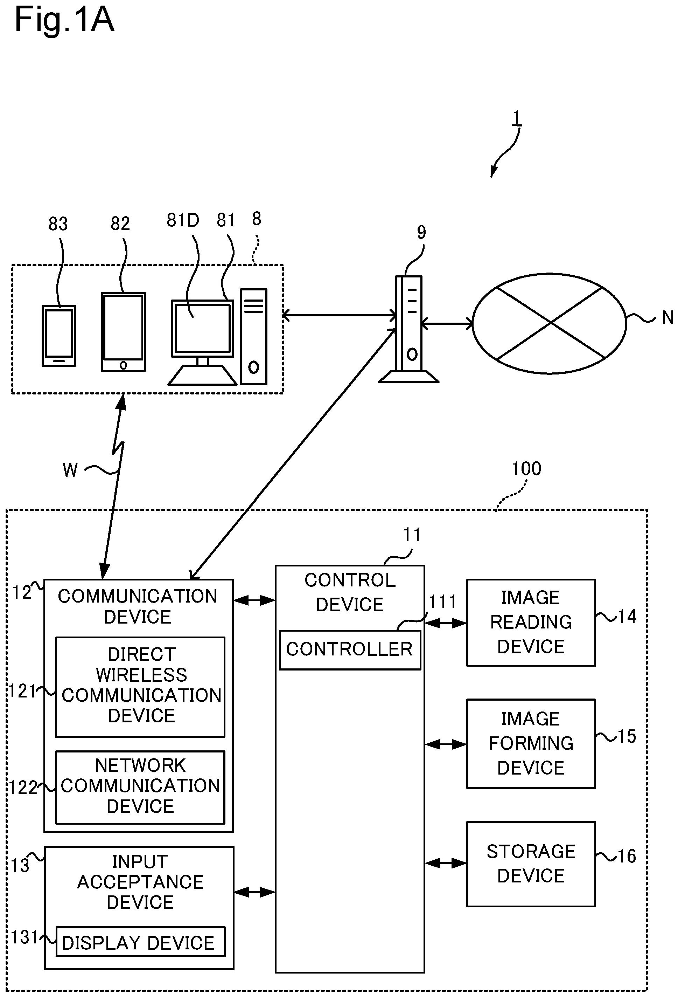

FIG. 1A is a diagram showing a configuration of an image formation system 1 according to one embodiment of the present invention. The image formation system 1 includes an image forming apparatus 100 and an electronic terminal 8. The image forming apparatus 100 and the electronic terminal 8 communicate with each other using direct wireless communication W. The direct wireless communication W is a communication method by which data is exchanged directly between devices, without using a router or the like, using a near-field wireless communication technology, such as Wi-Fi or Bluetooth (registered trademark). Direct wireless communication using Wi-Fi is generally referred to as "Wi-Fi Direct". Hereinafter, the direct wireless communication is written as "Wi-Fi Direct".

The electronic terminal 8 is a PC 81, a tablet terminal 82, a smartphone 83 or like electronic device. The electronic terminal 8 holds an application for use in performing data communication with the image forming apparatus 100 using Wi-Fi Direct.

The access point 9 is a device that connects wirelessly to the image forming apparatus 100 and the electronic terminal 8 to mediate access to a network N, such as the Internet. The access point 9 may be, for example, a wireless LAN router (a Wi-Fi router) having an access point function and a router function.

The image forming apparatus 100 is, for example, a printer, a copier or a multifunction peripheral having both the function as a printer and the function as a copier. The image forming apparatus 100 includes a control device 11, a communication device 12, an input acceptance device 13, an image reading device 14, an image forming device 15, and a storage device 16. The communication device 12 is constituted by a communication module and so on and includes a direct wireless communication device 121 and a network communication device 122.

The direct wireless communication device 121 is a communication module that executes processing for performing direct wireless communication W with the electronic terminal 8. The direct wireless communication device 121 allows the image forming apparatus 100 to function as an access point to communicate with the electronic terminal 8 by Wi-Fi Direct.

The network communication device 122 is a communication module that connects to the access point 9 to exchange various types of data with an external device, such as a server, via the network N, such as the Internet.

In this embodiment, it is assumed that Wi-Fi is used in the case where wireless communication is performed between the image forming apparatus 100 and the access point 9. However, connection using a wireless communication protocol other than Wi-Fi may be used.

The input acceptance device 13 includes hard keys, such as a decision key for giving a definite instruction for various operations and settings and a start key, a display device 131, and a touch panel. The display device 131 displays an operation screen, a message, and so on. The display device 131 may be formed integrally with the touch panel. The input acceptance device 13 accepts an instruction input based on an operation made on a hard key, such as the decision key or the start key, or a gesture made on the touch panel.

The image reading device 14 includes a scanner or the like. The image reading device 14 reads an image of an original document to acquire image data representing the image. The image forming device 15 includes an image forming mechanism that performs image formation in an electrophotographic system. The image forming device 15 prints, on a sheet, image data acquired by the image reading device 14, image data received by the communication device 12 from the electronic terminal 8 or so on, or other image data.

The storage device 16 is a large storage device constituted by an SSD (solid state drive), an HDD (hard disk drive) or the like that stores image data, various programs, a data table, and so on.

The control device 11 includes a processor, a RAM (random access memory), a ROM (read only memory), and so on. The processor is, for example, a CPU (central processing unit), an MPU (micro processing unit) or an ASIC (application specific integrated circuit). When the processor executes a control program stored in the ROM or the like, the control device 11 functions as a controller 111. The controller 111 governs the overall operation control of the image forming apparatus 100.

The controller 111 has an easy Wi-Fi setup mode (an easy setup mode). The easy Wi-Fi setup mode is a mode in which the image forming apparatus 100 uses Wi-Fi Direct to receive, from the electronic terminal 8, connection setup information necessary for the network communication device 122 to connect through the access point 9 to the network N and the controller 111 performs setup of the connection of the network communication device 122 to the access point 9 based on the connection setup information. The controller 111 executes the easy Wi-Fi setup mode in response to a user's operation on the input acceptance device 13.

In installing the image forming apparatus 100, the user or the administrator needs to set up a network connection for the image forming apparatus 100. In doing so, the easy Wi-Fi setup mode for setting up a network connection for the image forming apparatus 100 from the electronic terminal 8 using Wi-Fi Direct is used.

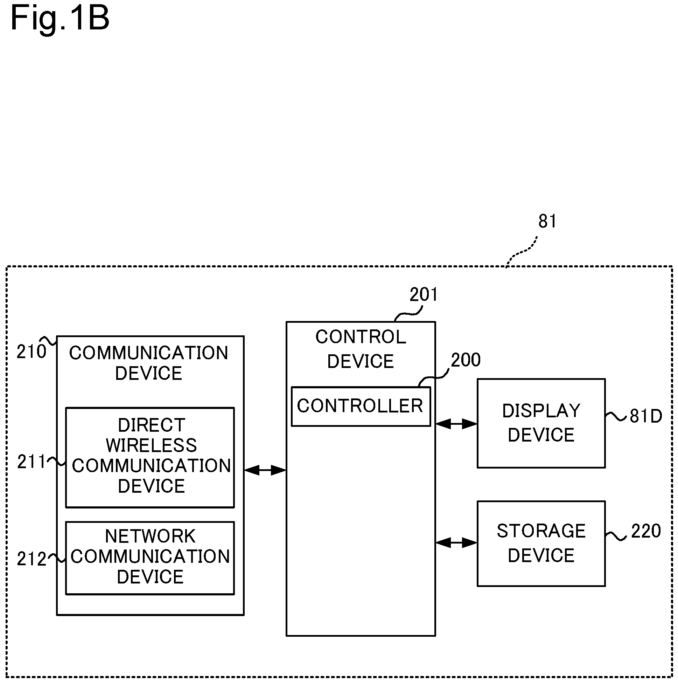

FIG. 1B is a diagram showing the configuration of a PC 81 as an example of the electronic terminal 8. The PC 81 includes a control device 201, a communication device 210, a storage device 220, and a display device 81D.

The control device 201 includes a processor, a RAM, a ROM, and so on. The processor is, for example, a CPU, an MPU or an ASIC. When the processor executes a control program stored in the ROM or the like, the control device 201 functions as a controller 200. The controller 200 governs the overall operation control of the PC 81.

The communication device 210 includes a direct wireless communication device 211 and a network communication device 212. The direct wireless communication device 211 is a communication module that executes processing for performing direct wireless communication W with the image forming apparatus 100. The direct wireless communication device 211 communicates with the image forming apparatus 100 by Wi-Fi Direct. The network communication device 212 is a communication module that connects to the access point 9 to exchange various types of data with an external device via the network N.

The storage device 220 is a large storage device including an SSD (solid state drive), an HDD (hard disk drive) or the like that stores various data and various programs. The display device 81D displays an operation screen, a message, and so on. The display device 81D may be formed integrally with a touch panel.

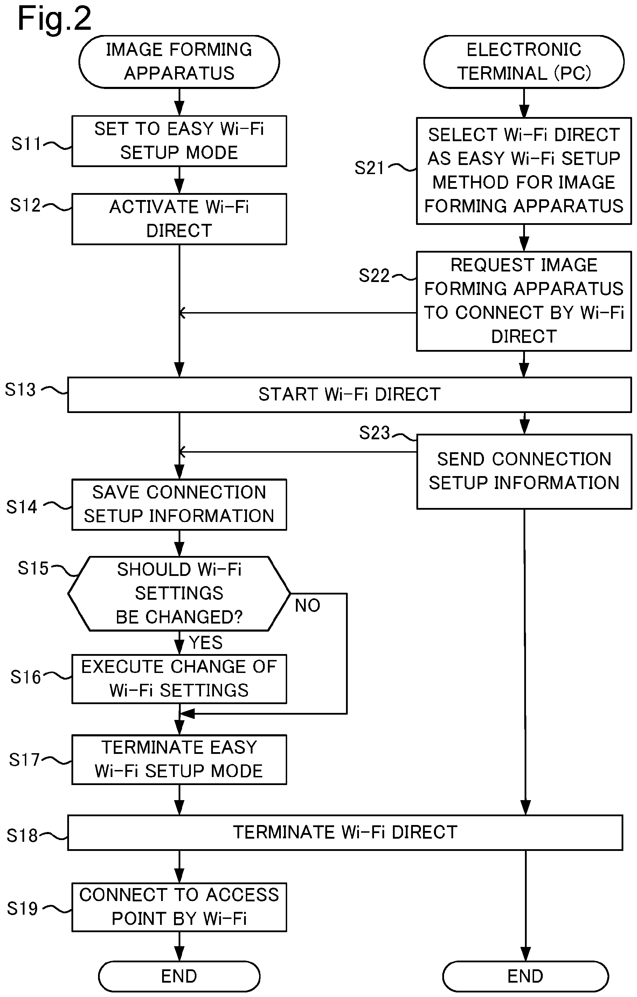

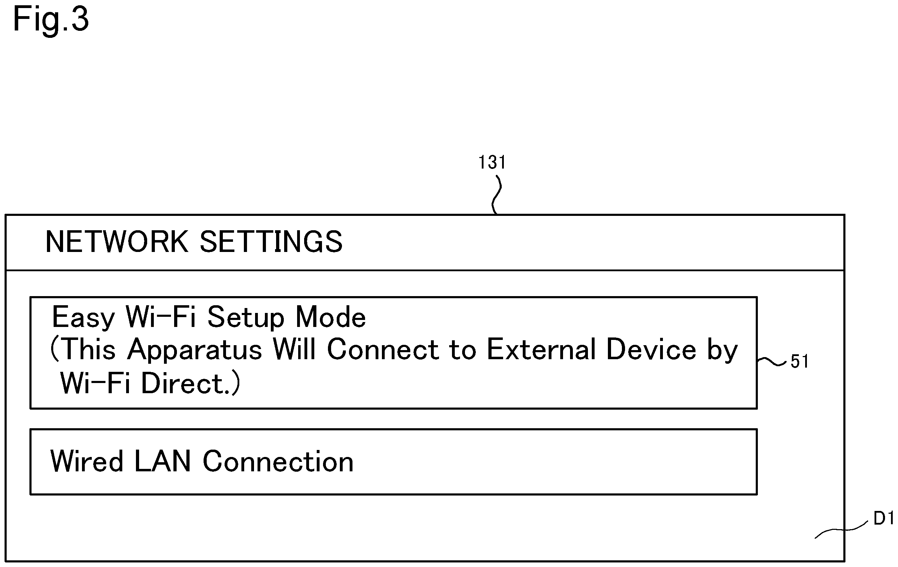

FIG. 2 is a flowchart showing the flow of the easy Wi-Fi setup mode in this embodiment. FIG. 3 is a view showing a network setup screen D1 in the image forming apparatus 100.

When the input acceptance device 13 detects a touch on a button 51 while the controller 111 allows the display device 131 to display the network setup screen D1, the controller 111 accepts an instruction to start the easy Wi-Fi setup mode and starts the easy Wi-Fi setup mode (step S11).

In this embodiment, in the case where the controller 111 executes the easy Wi-Fi setup mode for the first time, such as immediately after the installation of the image forming apparatus 110, the user operating the image forming apparatus 100 is highly likely to be an administrator of the image forming apparatus 100 and is therefore allowed to skip the step of personal authentication or the like.

In the second and subsequent executions of the easy Wi-Fi setup mode, the controller 111 executes personal authentication processing for identifying the administrator of the image forming apparatus 100. However, in the case where the controller 111 executes the easy Wi-Fi setup mode for the first time, personal authentication or the like may be required.

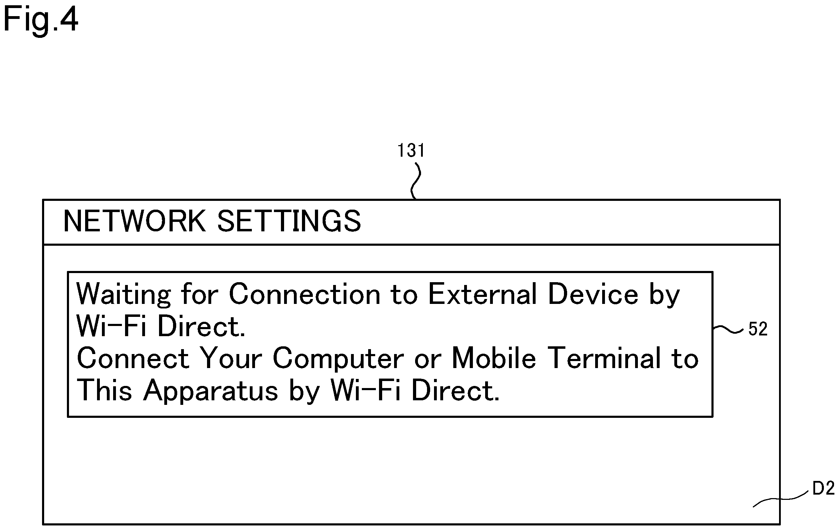

Subsequently, the controller 111 allows the display device 131 to display a waiting screen D2 shown in FIG. 4, activates the direct wireless communication device 121, and waits for a connection by Wi-Fi Direct.

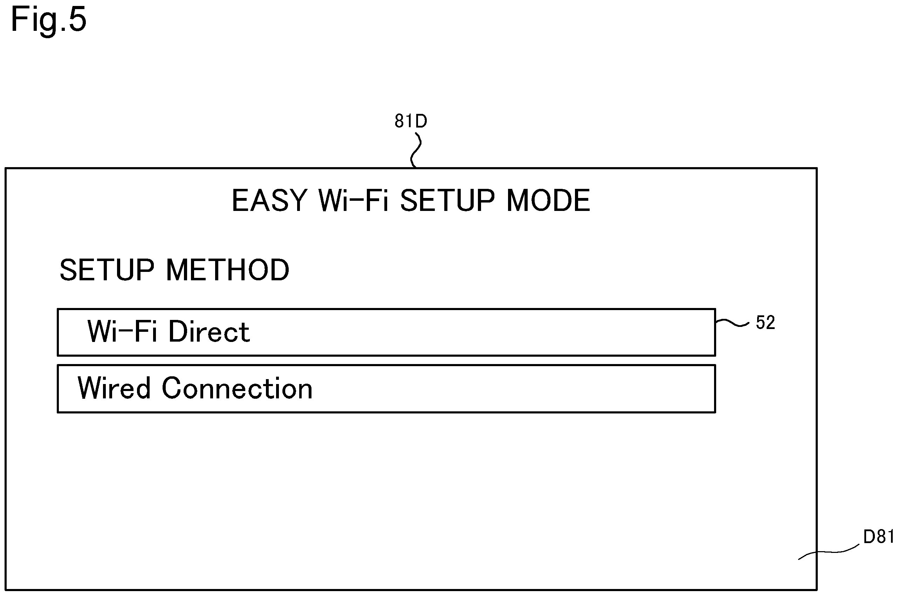

In the PC 81, while the controller 200 consisting of a CPU or the like puts the PC 81 into a state of waiting for an input of a setup instruction, the controller 200 allows the display device 81D including an LCD (liquid crystal display) or the like to display a setup screen D81 shown in FIG. 5.

When the administrator touches a button 52 showing "Wi-Fi Direct" while the setup screen D81 is displayed, the controller 200 of the PC 81 accepts an instruction for the easy Wi-Fi setup mode and selects Wi-Fi Direct as a method for easy Wi-Fi setup for the image forming apparatus 100 (step S21).

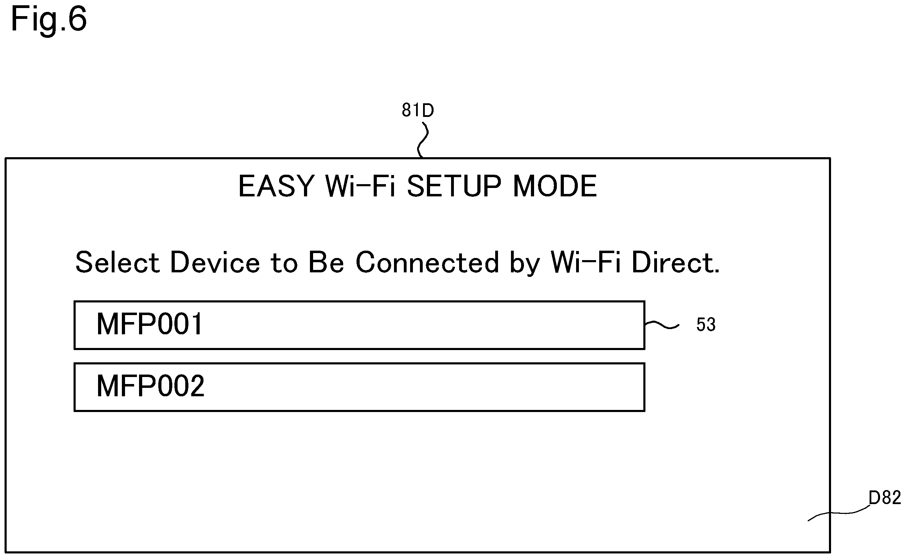

The controller 200 of the PC 81 allows the display device 81D to display a list screen D82 (see FIG. 6) showing a list of image forming apparatuses 100 connectable by "Wi-Fi Direct". When, in this state, the administrator touches a button 53 representing the image forming apparatus 100 (MFP001) in the list on the list screen D82, the controller 200 of the PC 81 accepts, through the touch panel provided on the display device 81D, an instruction to connect to the image forming apparatus 100 by Wi-Fi Direct and allows the communication device 210 provided in the PC 81 and consisting of a communication module to send to the image forming apparatus 100 a Wi-Fi Direct connect request (containing various information, such as an SSID and a password, necessary for a connection to the image forming apparatus 100 by Wi-Fi Direct) (step S22).

When, in the image forming apparatus 100, the direct wireless communication device 121 in an activated state receives the Wi-Fi Direct connect request from the PC 81, the direct wireless communication device 121 starts connecting to and communicating with the PC 81 by Wi-Fi Direct, using various information contained in the connect request (step S13).

In doing so, the image forming apparatus 100 and the electronic terminal 8 are connected, for example, by Wi-Fi Direct for the easy Wi-Fi setup mode. Wi-Fi Direct for the easy Wi-Fi setup mode provides a connection using an SSID (service set identifier) and a password different from those for normal Wi-Fi Direct.

In this case, the SSID and the password are transferred from the PC 81 to the image forming apparatus 100 in accordance with a predetermined rule and, thus, the image forming apparatus 100 and the PC 81 start Wi-Fi Direct for the easy Wi-Fi setup mode without administrator's input of the SSED and the password. Alternatively, the controller 111 may allow the display device 131 to display the SSID and the password of the image forming apparatus 100 necessary for Wi-Fi Direct for the easy Wi-Fi setup mode. In this case, when the administrator inputs the SSID and the password to the PC 81, the controller 200 of the PC 81 sends the input SSID and password through the communication device 210 to the image forming apparatus 100.

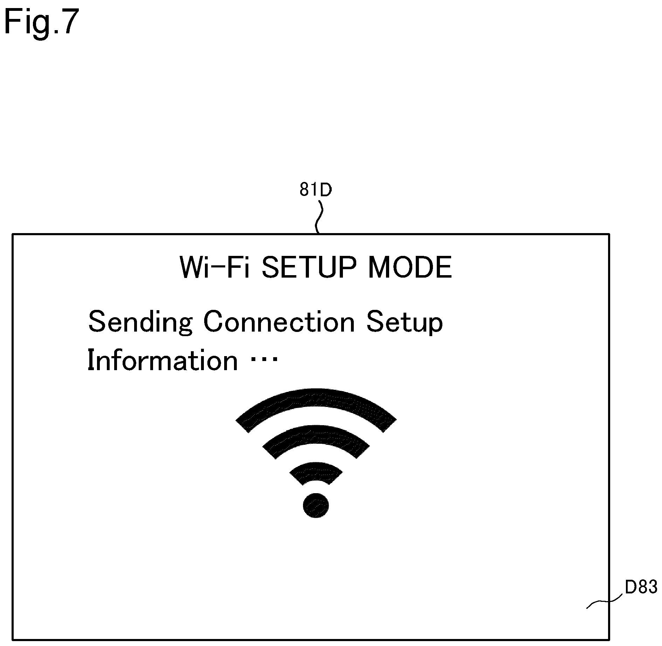

When communication by Wi-Fi Direct for the easy Wi-Fi setup mode starts between the image forming apparatus 100 and the PC 81, the controller 200 of the PC 81 allows the communication device 210 to send, to the image forming apparatus 100, connection setup information (an SSID and a password) stored in the storage device (such as a non-volatile memory) of the PC 81 and regarding setup of connection to the access point 9 (step S23). At this time, the controller 200 of the PC 81 allows the display device 81D to display a sending screen D83 shown in FIG. 7.

When the direct wireless communication device 121 of the image forming apparatus 100 receives the connection setup information from the PC 81, the controller 111 allows, for example, an internal memory of the communication device 12 to store the connection setup information (step S14).

Even if, during execution of the easy Wi-Fi setup mode after the internal memory of the communication device 12 stores the connection setup information, the direct wireless communication device 121 receives another connection setup information from any other electronic terminal 8 (for example, a tablet terminal 82), the controller 111 does not allow the internal memory of the communication device 12 to store the other connection setup information sent from the other electronic terminal 8. The controller 111 allows the direct wireless communication device 121 to send an error message to the tablet terminal 82 having sent the other connection setup information.

When the direct wireless communication device 121 has not received connection setup information regarding setup of connection to the access point 9 despite the passage of a predetermined time period from the start of Wi-Fi Direct for the easy Wi-Fi setup mode, the controller 111 forcefully terminates Wi-Fi Direct for the easy Wi-Fi setup mode. In other words, Wi-Fi Direct between the image forming apparatus 100 and the PC 81 ends.

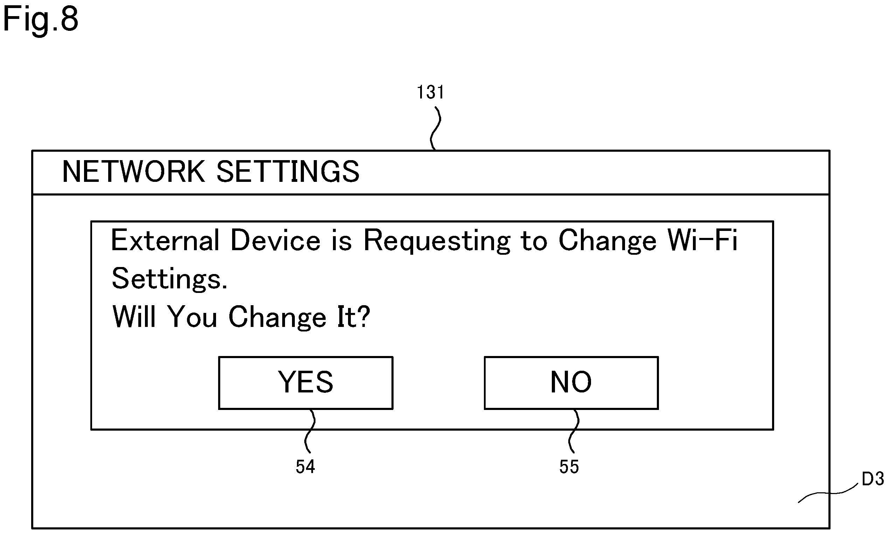

After step S14, the controller 111 of the image forming apparatus 100 allows the display device 131 to display a selection screen D3 shown in FIG. 8. The selection screen D3 displays a message intended to determine whether or not to change Wi-Fi settings for the network communication device 122 based on the connection setup information sent from the PC 81.

When in this situation the input acceptance device 13 accepts through the touch panel an instruction to permit a change in Wi-Fi settings, based on a touch gesture on a button 54 (YES in step S15), the controller 111 changes the Wi-Fi settings for the network communication device 122 based on the connection setup information sent from the PC 81 (step S16).

After step S16, the controller 111 terminates the processing in the easy Wi-Fi setup mode (step S17) and terminates the connection to the electronic terminal 8 by Wi-Fi Direct for the easy Wi-Fi setup mode (step S18).

On the other hand, when the input acceptance device 13 accepts through the touch panel an instruction not to permit a change in Wi-Fi settings, based on a touch gesture on a button 55 (NO in step S15), the controller 111 terminates the processing in the easy Wi-Fi setup mode without changing the Wi-Fi settings (step S17) and terminates the connection to the electronic terminal 8 by Wi-Fi Direct for the easy Wi-Fi setup mode (step S18).

When the image forming apparatus 100 and the PC 81 have already connected to each other by Wi-Fi Direct for the easy Wi-Fi setup mode (the processing from step S13 to step S18 in FIG. 2) and, during this time, the direct wireless communication device 121 starts the same type of Wi-Fi Direct connection for the easy Wi-Fi setup mode to an external device (for example, a smartphone 83) other than the PC 81, the controller 111 allows the display device 131 to display a message indicating that the smartphone 83 being an external device other than the PC 81 has started Wi-Fi Direct connection to the image forming apparatus 100 to which itself belongs.

When an SSID and a password are transferred from an electronic terminal 8 to the image forming apparatus 100 in accordance with a predetermined rule and Wi-Fi Direct for the easy Wi-Fi setup mode can be started between the electronic terminal 8 and the image forming apparatus 100 without administrator's input of the SSID and the password, a third person who is not an administrator might access to the image forming apparatus 100 without permission using Wi-Fi Direct for the easy Wi-Fi setup mode. A malicious third person might tamper with the Wi-Fi settings for the image forming apparatus 100.

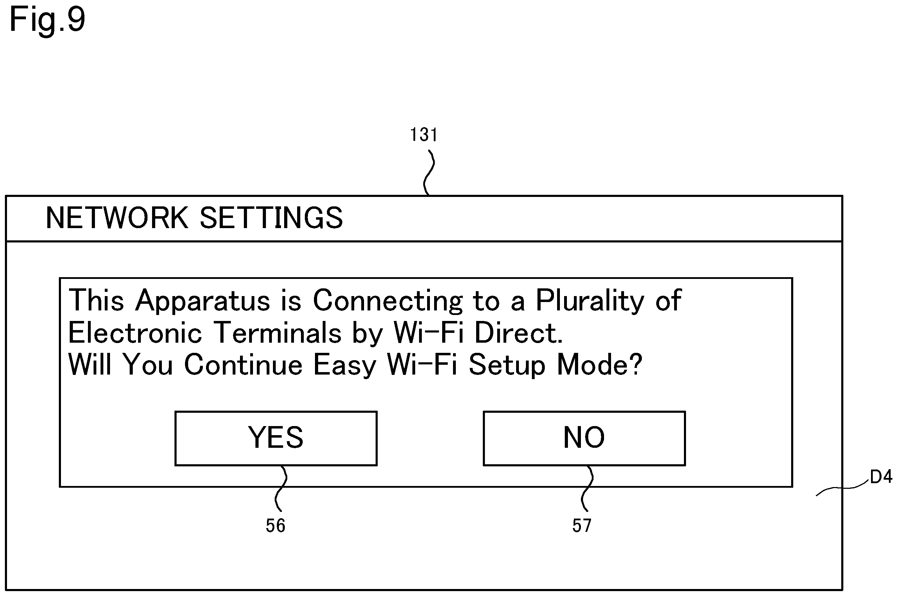

To avoid the above situation, when the direct wireless communication device 121 connects to a plurality of electronic terminals 8 during execution of the easy Wi-Fi setup mode, the controller 111 allows the display device 131 to display an alert screen D4 (see FIG. 9) containing a message indicating that the apparatus is connecting to a plurality of electronic terminals 8.

The controller 111 allows the display device 131 to display on the alert screen D4 buttons 56, 57 for use in selecting whether or not to continue the execution of processing in the easy setup mode, together with the above message.

When the input acceptance device 13 accepts through the touch panel an instruction to continue the execution of processing in the easy setup mode, based on a touch gesture on the button 56, the controller 111 continues the execution of processing in the easy Wi-Fi setup mode.

On the other hand, when the input acceptance device 13 accepts through the touch panel an instruction to stop the processing in the easy setup mode, based on a touch gesture on the button 57, the controller 111 stops the processing in the easy Wi-Fi setup mode.

In addition, the controller 111 of the image forming apparatus 100 allows the direct wireless communication device 121 to send, to each of the plurality of electronic terminals 8 being connected to the image forming apparatus 100 by Wi-Fi Direct, a message indicating that the image forming apparatus 100 is connecting to a plurality of electronic terminals 8 by Wi-Fi Direct.

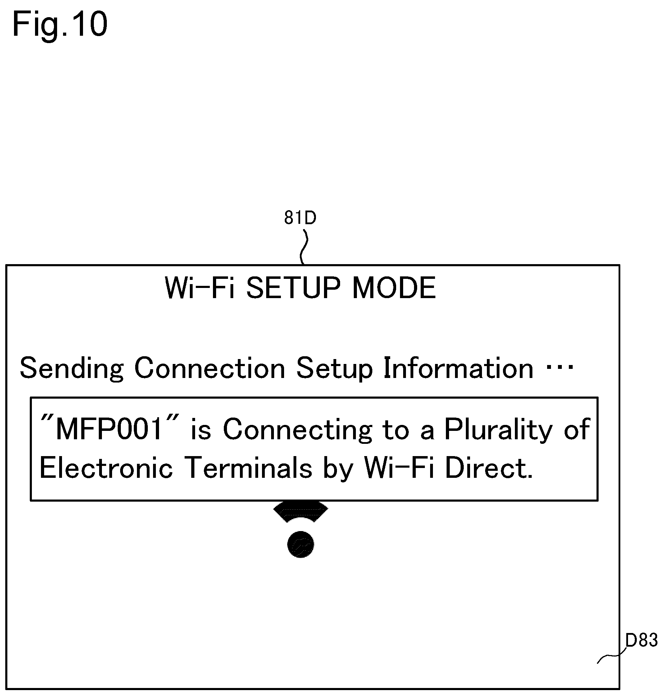

At this time (specifically, when receiving this message), the controller 200 of the PC 81 allows the display device 81D to display an alert screen D83 shown in FIG. 10. In this manner, when the number of opposite ends of communication from the image forming apparatus 100 by Wi-Fi Direct reaches two or more during execution of the processing in the easy Wi-Fi setup mode, this is displayed on the display device 131 of the image forming apparatus 100 and a message indicating that is sent to the electronic terminals 8 on the opposite ends of communication. Therefore, the administrator can recognize a Wi-Fi Direct connection from a third person, resulting in improved security.

When the controller 111 of the image forming apparatus 100 terminates the processing in the easy Wi-Fi setup mode (step S17) and the direct wireless communication device 121 of the image forming apparatus 100 and the PC 81 terminate Wi-Fi Direct for the easy Wi-Fi setup mode (step S18), the controller 111 allows the network communication device 122 to start Wi-Fi communication with the access point 9 (step S19).

When, by the time the controller 11 of the image forming apparatus 100 allows the direct wireless communication device 121 to connect to an administrator's electronic terminal 8 by Wi-Fi Direct and starts the processing in the easy Wi-Fi setup mode, the direct wireless communication device 121 has already connected to another electronic terminal 8 by Wi-Fi Direct, the controller 111 may allow the direct wireless communication device 121 to suspend or drop the connection to the other electronic terminal 8 by Wi-Fi Direct, then allow the direct wireless communication device 121 to connect to the administrator's electronic terminal 8 by Wi-Fi Direct, and start the processing in the easy Wi-Fi setup mode.

In the case where, as just described, immediately before the controller 111 executes the processing in the easy Wi-Fi setup mode, the image forming apparatus 100 has connected to another electronic terminal 8 by Wi-Fi Direct, the controller 111 may restart the connection to the other electronic terminal 8 having been connected by Wi-Fi Direct before the execution of the processing in the easy Wi-Fi setup mode, at the time the controller 111 has terminated Wi-Fi Direct for the easy Wi-Fi setup mode.

In the general technique described previously, while a legitimate user of the image forming apparatus, such as an administrator, is setting up a network connection for its communication device through a terminal device using direct wireless communication, a malicious third person might communicate with the image forming apparatus using direct wireless communication.

To cope with this, in the above embodiment, the administrator of the image forming apparatus 100 can receive, from the electronic terminal 8 of the administrator's own, connection setup information necessary for network connection setup of the image forming apparatus 100 using Wi-Fi Direct for the easy Wi-Fi setup mode, use the received connection setup information to set up the network communication device 122, and thus easily connect the network communication device 122 to the access point 9 to set up the network connection. Hence, in the above embodiment, simplification of a network connection for the image forming apparatus is compatible with ensuring of security.

When the image forming apparatus 100 has already connected to an administrator's electronic terminal 8 by Wi-Fi Direct for the easy Wi-Fi setup mode and, in this situation, a third person who is not an administrator connects to the image forming apparatus 100 through another electronic terminal 8 by Wi-Fi Direct, the controller 111 of the image forming apparatus 100 allows the display device 131 to display a message and the direct wireless communication device 121 sends a message to all of electronic terminals 8 being connected to the image forming apparatus 100 by Wi-Fi Direct. Thus, the administrator can immediately become aware of the access from a third person and, thus, the security can be improved.

Specifically, when, during execution of the easy setup mode, the direct wireless communication device 121 connects to a plurality of electronic terminals 8, for example, when an electronic terminal 8 operated by a third person who is not an administrator connects to the image forming apparatus 100 by direct wireless communication, the controller 111 allows the display device 131 to display a message indicating that the image forming apparatus 100 is connecting to a plurality of electronic terminals 8 and the direct wireless communication device 121 sends to the plurality of electronic terminals 8 a message indicating that a plurality of electronic terminals 8 are connecting to the direct wireless communication device 121. Thus, the administrator can immediately recognize that the electronic terminal 8 of a third person is connecting to the image forming apparatus 100 by direct wireless communication and, therefore, the security can be improved.

The present invention is not limited to the configuration of the above embodiment and can be modified in various ways. The structure, configuration, and processing described in the above embodiment with reference to FIGS. 1A to 10 are merely illustrative and are not intended to limit the present invention to them.

## Claims

1. An image forming apparatus (100) comprising:
an image forming device (15) that forms an image on a sheet;
a direct wireless communication device (121) that performs direct wireless communication with an electronic terminal (8);
a network communication device (122) that connects to an access point (9) connected to a network; and
a control device (11) that includes a processor and functions, through the processor executing a control program, as a controller (111) that controls processing in an easy setup mode in which connection of the network communication device (122) to the access point (9) is set up based on connection setup information received by the direct wireless communication device (121) from the electronic terminal (8) and regarding setup of connection to the access point (9), thus connecting the image forming apparatus (100) to the access point (9).

2. The image forming apparatus (100) according to claim 1, wherein when, during execution of the easy setup mode, the direct wireless communication device (121) connects to a plurality of the electronic terminals (8), the controller (111) allows the direct wireless communication device (121) to send to each of the plurality of electronic terminals (8) a message indicating that the direct wireless communication device (121) is connecting to the plurality of electronic terminals (8).

3. The image forming apparatus (100) according to claim 1, further comprising:
a display device (131); and
an input acceptance device (13) to which an instruction of a user is to be input,
wherein when the direct wireless communication device (121) receives the connection setup information, the controller (111) allows the display device (131) to display a first screen for use in selecting whether or not to execute connection setup for the network communication device (122), and
when the input acceptance device (13) accepts an instruction to execute the connection setup for the network communication device (122), the controller (111) performs the connection setup for the network communication device (122) based on the connection setup information.

4. The image forming apparatus (100) according to claim 1, further comprising:
a display device (131); and
an input acceptance device (13) to which an instruction of a user is to be input,
wherein when, during execution of the easy setup mode, the direct wireless communication device (121) connects to a plurality of the electronic terminals (8), the controller (111) allows the display device (131) to display a message indicating that the direct wireless communication device (121) is connecting to the plurality of electronic terminals (8).

5. The image forming apparatus (100) according to claim 4, wherein
when, during execution of the easy setup mode, the direct wireless communication device (121) connects to a plurality of the electronic terminals (8), the controller (111) allows the display device (131) to display a second screen for use in selecting whether or not to continue the easy setup mode,
when the input acceptance device (13) accepts an instruction to continue the easy setup mode, the controller (111) continues to execute the easy setup mode and performs control for connecting the image forming apparatus (100) to the access point (9), and
when the input acceptance device (13) accepts an instruction not to continue the easy setup mode, the controller (111) stops the easy setup mode.

6. An image formation system (1) comprising an image forming apparatus (100) and an electronic terminal (8),
the electronic terminal (8) comprising:
a terminal-side communication device (210) that communicates with the image forming apparatus (100); and
a first control device (201) that includes a processor and functions, through the processor executing a control program, as a terminal-side controller (200) that allows the terminal-side communication device (210) to send to the image forming apparatus (100) connection setup information regarding setup of connection to an access point (9) connected to a network,
the image forming apparatus (100) comprising:
an image forming device (15) that forms an image on a sheet;
a direct wireless communication device (121) that performs direct wireless communication with the electronic terminal (8);
a network communication device (122) that connects to the access point (9); and
a second control device (11) that includes a processor and functions, through the processor executing a control program, as a controller (111) that controls processing in an easy setup mode in which connection of the network communication device (122) to the access point (9) is set up based on the connection setup information received by the direct wireless communication device (121) from the electronic terminal (8), thus connecting the image forming apparatus (100) to the access point (9).

7. The image formation system (1) according to claim 6, wherein
the electronic terminal (8) further comprises a terminal-side display device (81D),
when, during execution of the easy setup mode, the direct wireless communication device (121) connects to a plurality of the electronic terminals (8), the controller (111) of the image forming apparatus (100) allows the direct wireless communication device (121) to send to each of the plurality of electronic terminals (8) a message indicating that the direct wireless communication device (121) is connecting to the plurality of electronic terminals (8), and
when the terminal-side communication device (210) receives the message, the terminal-side controller (200) of the electronic terminal (8) allows the terminal-side display device (81D) to display a third screen indicating the message.
